# EUROPEAN PATENT APPLICATION

(11) **EP 3 855 115 A1**
(43) Date of publication of application: **28.07.2021**
(21) Application number: 20153247.0
(22) Date of filing: 22.01.2020
(51) Int. Cl.: G01C 15/00, G01S 7/481

(54) **GEODETIC INSTRUMENT WITH A STATIC BASE**

(71) Applicant: Leica Geosystems AG, 9435 Heerbrugg (CH)
(72) Inventor: HOTZ, Johannes, 9445 Rebstein (CH); BÖSCH, Thomas, 6890 Lustenau (AT); MÜLLER, Josef, 9413 Oberegg (CH)
(74) Representative: Kaminski Harmann

(57) **Abstract**

The invention relates to a geodetic instrument, e.g. a total station, laser scanner, laser tracker or laser level, for example for construction works. The geodetic instrument is separated into a static base part and a rotatable targeting part. The base part comprises a power unit for powering the geodetic instrument and the targeting part comprises a surveying and/or projection module for geodetic surveying and/or projection in a changeable target direction. Any change of the target direction is effected with the base part remaining static wherefore the targeting part is rotatable relative to the base part. The base part inertia is equal to or greater than the target part inertia.

## Description

The present invention relates to a geodetic surveying and/or projection instrument.

Geodetic instruments such as laser scanner, laser tracker, theodolites, laser templators or laser level for surveying or projection e.g. of point coordinates are known in the art. Such surveying appliances for tracking or marking and surveying spatial points on surfaces of a structure or object are particularly used for measuring of a surrounding or workpiece, in particular large entities such as fuselages, or construction or inspection of buildings, e.g. in course of BIM (Building Information Model) to Field-assignments or laying out building elements such as MEP (Mechanical Electrical Plumbing) installation, walls, anchor points etc. Such instruments are used for traditional geodesy (land surveying) or for geodetic measuring in the industry (e.g. 3D-coordinate acquisition of workpieces for quality control) as well as for accurate construction of buildings like streets, tunnels or houses and for interior construction or assembly tasks, e.g. using templating, by designers like architects, kitchen makers, glaziers, tilers or staircase builders, e.g. for as-built data capture. It is emphasized that, in the present application, the terms "geodesy" and "geodetic" are not limited to the scientific discipline that deals with the measurement and representation of the surface of the earth and the seafloor, but relate in a broad sense to measuring, surveying and position true projection of object points in order to acquire digital object coordinates or mark digital object coordinates in space.

Known geodetic instruments of the generic type such as construction surveying appliances typically comprise a laser source, which is designed to emit a laser beam from a location or station of the geodetic instrument in a targeting direction, and an imaging detector, for example equipped with an orientation indicating functionality for indicating an orientation of a sighting unit with respect to a spatial point as a sighting point, and also with a distance determining detector for providing a distance measuring functionality. By way of example, the orientation indicating functionality may be a reticle in the viewfinder of a camera as imaging detector.

Modern, automated construction surveying appliances furthermore comprise rotary drives for motorized change of the targeting direction and, if appropriate, inclination sensors for determining the spatial orientation of the sighting unit, and also an evaluation and control unit, which is connected to the laser source, the distance determining detector and also the goniometers and, if appropriate, inclination sensors.

In this case, the evaluation and control unit is equipped, by way of example, with a display having input means for inputting control commands from a user on the display (e.g. touchscreen) or what is known as a joystick that is directable, for the purpose of altering the orientation of the sighting unit by directing the joystick, and for presenting an image from the imaging detector or the camera on the display, wherein the orientation of the sighting unit can be indicated by means of the orientation indicating functionality on the display, e.g. by means of overlaying. Functionalities are known in which the input means on the display are in the form of arrows, the marking and touching of which enable a user to alter the orientation of the sighting unit and thus the targeting direction in a horizontal or vertical direction.

On the other hand, projection of visible or invisible points or lines is used for providing positional reference points or lines -e.g. taken from a CAD-model, digital building plan (e.g. a building information model, BIM) or the like- serving as a reference for either the human eye or for electronic systems and also allowing automatic positioning or machine guidance. Here, the reference lines are usually created by widening a laser beam, which is possible for straight lines in particular, or else by rotating projection of a laser point.

An example of geodetic instruments suitable for this are rotating lasers, which are positioned in a particular location and serve to fix a plane using a visible or invisible laser beam and have been in use for a number of years now, for example in the building trade or in industry. They are a valuable aid for marking construction lines on horizontal, vertical or else defined angled planes. However, some rotating lasers are disadvantageous in that they are only able to create those projection planes which contain the initial point of the laser beam. Thus, in order to project spatial points along a line in a predefined horizontal plane, the light emission point of such a conventional rotating laser must be positioned precisely in this plane and the laser must be adjusted precisely to the horizontal light emission. Thus, the work region for using a rotating laser for marking a horizontal plane is restricted to the adjustment region for the height of a holder on which the rotating laser instrument is positioned. Projecting a laser beam rotating about a vertical axis in a non-horizontal (e.g. directed obliquely upward) direction leads to spatial points situated closer being projected to a lower height than spatial points situated further away.

DE 44 43 413 discloses a method and a device for both measuring and marking on distanced lines or areas. The geodetic instrument is deployed at a stationing and one or more relevant spatial points are measured in respect of in each case two spatial angles and the distance in relation to a reference point using a laser-distance measuring unit, mounted in a cardan-type mount. The laser-distance measuring unit is pivotable about two mutually perpendicular axes which are equipped with goniometers. In accordance with one embodiment described in these documents, spatial points to be measured are targeted manually, marking points are calculated from the measurement data based on a predetermined relative relationship between measuring and marking, which marking points are then targeted independently by the measuring and marking device.

As another example, EP 2 053 353 discloses a reference line-projecting unit with an electro-optical distance measuring unit. In accordance with the teaching of this application document, an optical reference beam, in particular a laser beam, is routed along a defined reference path. By integrating a distance measuring unit, the system disclosed in EP 2 053 353 also enables a control of the projection on the basis of an established surface topography.

DE 196 48 626 discloses a method and an apparatus for area surveying with a laser rangefinder having a laser transmitter and a laser receiver. The laser rangefinder is mounted on a stand. The apparatus furthermore comprises a tilting and rotating unit for orientation and direction measurement, a telescopic sight and also an electronic evaluation unit for angle data capture, distance data capture and data transfer to a computer. For surveying a space, the appliance is stationed at a central location in the space.

As can be seen, a large number of technical arrangements and methods are known for measuring and/or marking spatial points, for instance in the course of industrial manufacturing, construction or development of buildings. Also, in order to fulfil complex surveying tasks, in particular in a free terrain, geodetic total stations or theodolites, as known in the generic prior art, have been used for very many years. Such devices are, in principle, technically also suitable for fulfilling a plumb point finding functionality, for example during interior finishing of a building.

A problem of such portable geodetic instruments of the state of the art is that their limited operational duration due to the limited capacity of the battery. In addition, known instruments are relatively heavy and bulky and thus cumbersome for a user or operator to carry around or reposition.

Another problem is that often the connection to ground in a particular stationing is not known to the electronic controller of the instrument. The respective movement behaviour of the instrument depends on the stationing, e.g. on the particular tripod used, and cannot be predetermined. Hence, it is not possible to use the controller dynamics completely.

It is therefore an object of the invention to provide an improved geodetic instrument.

This object is achieved by the realization of the characterizing features of the independent claims. Features that develop the invention in an alternative or advantageous manner can be gathered from the dependent patent claims and also the description including the descriptions of figures. All embodiments of the invention that are illustrated or disclosed in some other way in this document can be combined with one another, unless expressly stated otherwise.

The invention relates to a geodetic instrument, for example a total station, laser scanner, laser tracker or laser level. The instrument comprises a base part and a separate targeting part. The base part at least comprises a power unit for powering the geodetic instrument -it may in addition comprise other units of the geodetic instrument- and the targeting part comprises a surveying and/or projection module for geodetic surveying and/or projection in a changeable target direction. The orientation of the geodetic module defines the changeable target direction.

Any change of the target direction is effected with the base part remaining static. Accordingly, the targeting part is rotatable relative to the base part about at least a first, in particular vertical, axis. Preferably, the surveying and/or projection module is rotatable about a second, in particular horizontal, axis, i.e. the targeting part comprises a structure holding the geodetic module and the module is rotatable relative to the holding structure. Thus, the targeting direction is changeable with respect to two axes, e.g. a horizontal one and a vertical one. Alternatively, the complete targeting part is rotatable about two axes.

In addition, the base part inertia and the target part inertia are at least roughly equivalent to each other. Said otherwise, the inertia of the base part and the one of the targeting part are adapted to each other to be similar.

Preferably, the geodetic instrument comprises a mechanical and electrical interface connecting the targeting part to the base part, wherein the interface optionally comprises an optical interface.

Optionally, the mechanical interface comprises at least three guidance elements with equal angular spacing to each other whereby each guidance element comprises a ball or spherical calotte and a two-point support as a receiving counterpart, each two-point support being for example embodied as one prism or two cylinders. Preferably, the ball or spherical calotte and a two-point support are preloaded with respect to each other by magnetic force or by springs.

Preferably, at least the base part is balancing mass free.

As another preferred option, the mass of the base part is chosen such, that the resonant frequency of the geodetic instrument is optimized with respect to a non-interference with geodetic measurements by the geodetic instrument. For this purpose, for example the size (mass) of the power unit is chosen accordingly and/or instruments units are distributed among targeting part and base part accordingly. Distribution of units among targeting part and base part and/or within the targeting part can also be adapted such that balancing masses within the targeting part are dispensable.

Optionally, the geodetic instrument comprises one human-machine interface and/or a wireless transmitter situated in the base part.

As another option, the geodetic instrument comprises at least one drive, powered by the power unit, adapted for automated change of the target direction and at least one angle encoder for measuring the targeting direction of the geodetic instrument. Both the at least one drive and the at least one angle encoder are situated in the base part. It is optionally also possible to exchange the base unit tool-free. Then a new base unit powers the instrument and the removed base unit can be charged.

In a specific embodiment, all units of the geodetic instrument which have not imperatively to be moved for said change of targeting direction and/or units with a high inertia compared to the inertia of other units of the geodetic instrument are situated in the base part.

Optionally, the targeting part is mountable to the base part and dismountable from the base part tool-free.

As a further development, the geodetic instrument is designed for mounting of various targeting parts and/or surveying and/or projection modules of different geodetic type and execution of accordingly different geodetic surveying and/or projection functions. Alternatively or additionally, the geodetic instrument is designed for mounting of various base parts, for instance base parts with different inertia, power units and/or processors.

In some embodiments, the base part is fixedly mounted to a support structure, for example a tripod or an autonomous/robotic vehicle support structure (a support structure integrated or designed for integration into a automobile robot). In this embodiments, the power unit is embodied as an electrical power supply e.g. with an AC-DC-converter.

As another option, the targeting part and/or the geodetic surveying and/or projection module is designed as a portable stand-alone geodetic surveying and/or projection device with a battery, a data storage and a processor in such a way that temporarily geodetic surveying and/or projection with the geodetic surveying and/or projection device dismounted from the base part and/or targeting part is enabled.

Hence, the present invention due to its separation of the geodetic instrument in a static or motionless part and a rotatable part as described advantageously provides a geodetic instrument with considerably improved motion properties. Not only less energy is necessary for operation with respect to change of targeting direction, but in addition a higher dynamic behavior / measurement performance is enabled. Due to the similarity of the static and rotational inertias, the controller dynamics can be fully exploited and different battery sizes/masses do not have an influence on the dynamics of the moving component.

Above that, the static (base) mass can be adapted such that the rotational characteristics or behavior do not or least considerably less influence the measurements. Thus, the geodetic precision is not (or at least considerably less) disturbed by the instrument's motion. In addition, as balancing masses can be spared, the overall mass of the instrument can be reduced, allowing for an easier handling/transportation.

Further, in said embodiments with flexible mounting of various base parts and/or targeting parts, a variety of instrument configurations is enabled. Therefore, an easy adaption of the instrument to different geodetic tasks is provided, amongst others saving costs as a user has not to keep ready a couple of different instruments any more but only one basic infrastructure is necessary which can be equipped with different top or bottom parts. Thus, such specific embodiments according to the invention allow for an uncomplicated and easy adaption to different geodetic objects by the user on-site, without the need for many different costly separate "full-fledged" instruments.

The geodetic instrument according to the invention is described or explained in more detail below, purely by way of example, with reference to working examples shown schematically in the drawing. Identical elements are labelled with the same reference numerals in the figures. The described embodiments are generally not shown true to scale and they are also not to be interpreted as limiting the invention.

Specifically,
- fig. 1: shows a geodetic instrument of the state of the art;
- fig. 2: a first example of a geodetic instrument according to the invention;
- fig. 3: a cross-sectional view of an embodiment of a geodetic device 20 according to the invention;
- fig. 4: shows an exemplary detail of said mechanical interface between base part and targeting part; and
- fig. 5a-c: different examples of a geodetic instrument according to the invention.

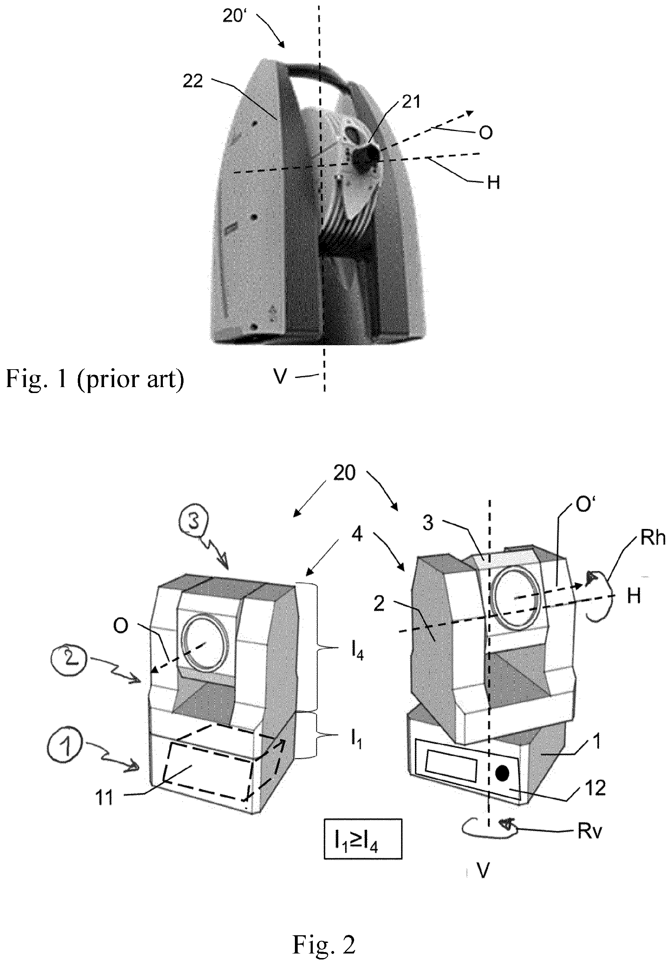

Figure 1 shows a geodetic instrument 20' of the state of the art, in the example embodied as a laser tracker. The geodetic instrument 20' comprises a telescope 21 within a main body 22, defining a target direction O. Typically, a laser beam (not shown) is emitted through the telescope 21 in target direction O, reflected by an object such as a retroreflector and detected through telescope 21 by a photodetector (not shown) of the instrument 20'. By distance determination (e.g. by time-of-flight, phase, wave form or interferometric evaluation) and with determined target direction, 3D coordinates of object points are measured.

The target direction O can be changed in such a way that different objects resp. object points can be measured or pointed to from one and the same stationing or position of the geodetic instrument 20'.

Any change of target direction O (using the instrument 20' itself; a change of target direction by displacing the instrument 20' to another stationing is not meant here) is effected by rotation of the main body 22 about a first, vertical axis V relative to the ground (or some sort of support structure, e.g. a tripod - not shown in the figure) and by rotation of the telescope 21 about a second, horizontal axis H relative to the main body 22.

Said otherwise, for geodetic tasks such as surveying or measuring of a building or room, of an area, a workpiece or any other object or for geodetic position true projection of points, lines or the like, the telescope 21 and the main body 22 or the whole device 20' has to be rotated, at least about a first axis V.

That is disadvantageous as geodetic instruments 20' such as a total station, laser scanner, laser level, rotary laser or laser tracker are relatively heavy, weighing for example about 5 kg. This weight has to be accelerated and slowed down which costs energy which is particularly troublesome as typically such geodetic instruments 20' are portable and battery driven. A power unit larger in size (capacity) providing more energy reserve for movement of the instrument 20' increases the instrument's weight even more.

Above that, a relatively great mass and thus inertia leads to a slow or inertly dynamic behaviour of the geodetic instrument 20'. The acceleration time is long, impeding or at least compounding highly dynamic changes of targeting direction and thus highly dynamic measurements, e.g. tracking of fast objects. As a further disadvantage, as the inertia of a support structure such as a tripod is not known or varies from stationing to stationing, the dynamics of a controller controlling a motorized rotation of geodetic instrument 20' cannot be fully applied.

In addition, as there is rotation to be effected, there is a need for balancing masses for compensation of unbalance. Besides the additional effort and costs in manufacturing, these balancing masses further increase the mass to be accelerated.

Figure 2 shows in a 3D-view a first example of a geodetic instrument 20 according to the invention, e.g. for use in construction works, manufacturing control or surface measurements. The instrument 20 comprises a base part 1 and a targeting part 4. The targeting part 4 comprises a bridge 2, carrying a surveying and/or projection module 3. For example, the instrument 1 provides by module 3 a 780nm EDM (electronic distance measuring) laser for surveying and a 532nm laser for pointing or projection. The orientation of the surveying and/or projection module 3 defines a targeting direction O, in which for instance a respective surveying and/or projective laser beam is emitted.

For a change of the targeting direction O, only the targeting part 4 is moved whereas the base part 1 remains static. This is shown in the figure: on the left side of the figure, the instrument 20 is shown pointing in a first targeting direction O. The targeting direction is altered to a new targeting direction O' whereby the pose of the base part 1 remains unchanged.

The change of targeting direction from first direction O to a second direction O' is effected by moving only the targeting part 4 in that the complete targeting part 4 is rotated (arrow Rv) about a first axis V (relative to the base part 1) and the surveying and/or projection module 3 is rotated (arrow Rh) about a second axis H (relative to the bridge 2 and thus also relative to static base part 1). In the example, the first axis V and the second axis H are perpendicular to each other, in particular the first axis V is vertical and the second axis H horizontal.

Due to this arrangement with partition or split of the instrument 20 in one part 1 which can stand still or rest immobile and another part 4 to be rotated, not the complete geodetic device 20 has to be moved to achieve change of targeting direction O, but only part of it.

This saves energy and enables a higher dynamic response of the instrument 20. In addition, at least the base part 1 does not need any more balancing masses as do generic geodetic instruments of the state of the art. Thus, the overall mass of the instrument 20 is considerably reduced which is particularly advantageous for portable devices as carrying around a heavy instrument is cumbersome for a user or requires more energy if for example attached to a robot.

As the power unit 11, e.g. a battery, of the geodetic instrument 20 is one of the heaviest units of the instrument 20, it is situated in the static base part 1. There, it has not to be moved and thus no energy is required for acceleration and retardation of this instrument unit of great mass.

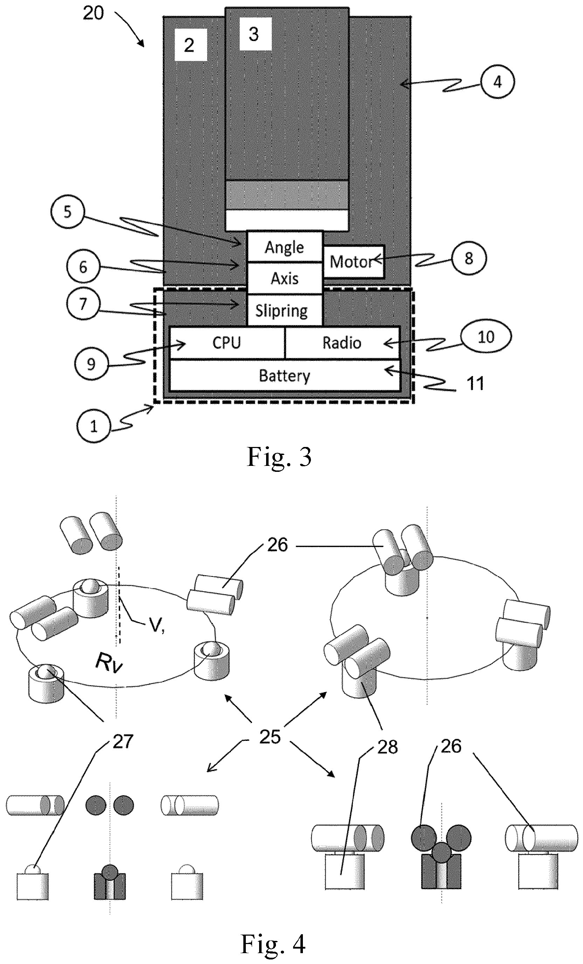

The power unit 11 may not be the only unit of the instrument 20 which is separated into an instrument part which remains still (see following figure 3). Preferably, units which a relatively great mass or inertia are placed in the base part 1. Alternatively or additionally, units such as a human-machine interface (HMI) 12 as shown on the right side of figure 2 can be placed on the static base part 1 as it is advantageous that the HMI 12 for user control of geodetic instrument 20 and user information / data display remains facing the operator instead of moving away during operation when the targeting direction O has to be changed. For the same reason, preferably any interfaces or plugs for connection to external devices such as a power station for reloading battery 11 or USB-interface are located at the base part 1. In fact, in some embodiments all instrument units which have not to be moved for change of targeting direction O are integrated in the static base part 1.

In addition, the inertia I1 of the base part 1 and the inertia I4 of the targeting part 4 are chosen such that they are at least roughly equivalent or such that base inertia I1 is greater than the targeting part inertia 14, e.g. by an according distribution of the units of the instrument 20 between base part 1 and targeting part 4. A similarity of inertia I1 and inertia I4 is advantageous for said partition of the geodetic instrument 20 in a static part 1 and a part 4 rotating thereto. In particular, the dynamic of an instrument's controller controlling the rotation can be maximally applied, this even substantially independently of the specific stationing of geodetic instrument 20.

Figure 3 shows a cross-sectional view of an embodiment of a geodetic device 20 according to the invention. Shown is the static base part 1 and the targeting part 4 rotatable relative to the base part 1 about a (physical) axis 6.

The exemplary device 20 has a drive with a motor 8, situated in the targeting part 4. The drive 8 is powered by the battery 11 which is integrated in the base part 1 as it is of relatively great mass. The energy is transferred via an interface between base part 1 and target part 4, the interface being in the example a combined electrical and mechanic interface comprising a slip ring 7. In addition, the interface can comprise an optical component (optical interface), e.g. for data transmission. Hence, said rotation about axis 6 is effected by motorization. The actual rotational position is determined with an angle encoder 5, in the example situated in the targeting part 4. For rotation of the module 3 relative to support structure 2, the instrument 20 can comprise a separate second drive located in bridge 2 or the motor 8 is also used for rotation of module 3, using an according gearing. Alternative to the illustration, drive 8 as well as angle sensor 5 are integrated in the base part 1.

The targeting part 4 may further comprise, as known in principle by the skilled person, an automatic target recognition (ATR)-unit (not shown) for locking onto a geodetic target such as a surveying pole respectively for target tracking. In addition, a far field ATR is optionally present, comprising RGB-LEDs arranged on the circumference of the ATR-camera objective. The module 3 can also comprise a camera such that a user can capture images or a live-stream of the environment.

The distribution of units such as the described ones or e.g. a processor 9 and a wireless transmitter 10 such as Bluetooth, LTE or 5G as shown in figure 3, is for example chosen such that the resonant frequency of the base part 1 is optimal. The eigen frequency is advantageously such that is does not interfere or only minimal interfere with any geodetic measurements (operations). Another possibility to achieve such an optimal resonant frequency is by choosing the size/mass of the power unit 11 in such a way that the resonant frequency of base part 1 does not influence the measurements.

Figure 4 shows an exemplary detail of said mechanical interface between base part and targeting part.

Figure 4 shows in the upper part two 3D views of (part of) mechanical interface 25. In the lower part, there are two side and cross sectional views. On the left side, figure 4 depicts the reception part and the insertion part separated or dismounted (semi-exploded view) and the right side depicts the interface 25 when the parts are attached to each other.

As shown, the interface 25 comprises three balls 27 fixed in conical receptions (bores) 28, distributed equally around a center (120° angular spacing). The balls 27 are to be clamped by a pair of elongated cylindrical guiding elements 26 each situated in the interface's counterpart. The clamping is for example effected by magnetic force. Therefore, for instance the cylinders 26 are made of steel and the balls 27 are made of steel or ceramic and a magnet either in the center of the arrangement (not shown) or located around the balls (not shown) are pulling the two parts towards each other. This configuration results in a self-centering coupling.

A possible alternative to the configuration shown in figure 4 as a robust and tolerance independent interface, which can compensate for thermal expansion, too, the fixation 50 comprises three equally spaced cylinders 26 (or elongated prismatic bodies) clamped into a pair of balls 27 each. That is to say, in difference to the embodiment shown in figure 4, not the balls 27 are fixed by cylinders 26 but the other way round.

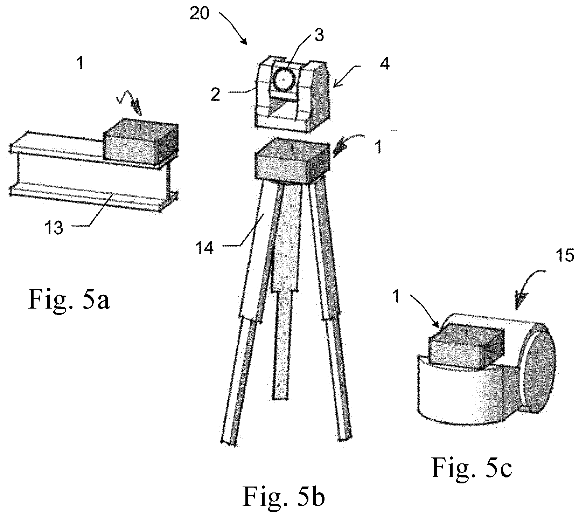

Figures 5a-5c show different examples of a geodetic instrument 20. The instrument 20 resp. its base 1 can be mounted to a fix installation 13 (figure 5a), a portable structure such as a tripod 14 (figure 5b) or an automobile or robotic vehicle 15 (figure 5c).

The base part 1 may optionally comprise different adapters for mounting to different support structures. Alternatively, the base part 1 is optionally fixedly mounted to such a support structure, e.g. it is permanently mounted to tripod 14 or to autonomous vehicle 15 (resp. some part of vehicle 15). Particularly in case of such a fix installation, the power unit is embodied as an electrical power supply, e.g. an AC-adapter.

As illustrated in the figures 5a-c, as another option - particularly in case of a fixed base part 1- the targeting part 4 can be mounted and dismounted from the base part 1 without any tools. This allows for a placement of one and the same targeting part 4 to different base parts 1, e.g. the target part 4 can be tool freely dismounted from tripod 14 and mounted to the robot 15, thus providing a bunch of geodetic capabilities.

In addition, the possibility of such tool-free disconnection of base part 1 from targeting part 1 is used to combine a targeting part 4 with various base parts 1, the base parts 1 differing for example with respect to battery size / capacity, processor power or mass / inertia.

As another option -the other way round- one and the same base part 1 can be combined with different types of targeting parts 4. In this way, for example one tripod-base part combination as shown in figure 5b can be combined with different targeting parts 4. The geodetic instrument 20 is then designed for execution of different geodetic surveying and/or projection operations and embodies for instance with one targeting part 4 a laser scanner, with another one a total station and with yet another one a laser tracker.

In addition or alternatively, such an interchangeability and provision of different geodetic operabilities is enabled in that the geodetic surveying and/or projection module 3 is (dis-)connectable to the targeting part 4 resp. bridge 2 tool-free. Geodetic instrument 20 thus serves as a multipurpose geodetic instrument by the possibility to easily and quickly exchange the instrument parts 1, 3 or 4 with another one. Preferably, each parts 1, 3 or 4 comprises an identifier, e.g. by RFID, such that the instrument 20 can automatically identify which type or which individual part 1, 3 or 4 is mounted.

In a further development, the targeting part 4 and/or the geodetic surveying and/or projection module 3 is designed as a portable stand-alone geodetic surveying and/or projection device. That is, the targeting part 4 and/or the module 3 can be non-permanently used for geodetic operation on its own as standalone devices, without base part 1. The targeting part 4 resp. module 3 comprises in this development a (second) battery (of relatively small size), a data storage and a processor, whereby the data storage and/or the processor can be the ones of the geodetic instrument 20 as such (e.g. CPU 9 in figure 3) or additional second or "auxiliary" units. In other words, the targeting part 4 and/or the surveying and/or projection module 3 is not only functional or operative when connected to the base 1 but also in some limited form on its own.

For example, dismounted targeting part 4 of a geodetic instrument 1 embodied as a laser scanner can be placed in a narrow location which is not accessible for the instrument as a whole and used there as a profiler, rotating module 3 about the second axis. Or, dismounted surveying module 3 can used on its own for temporary free-hand measurements. For example, the possibility of independent operation of the geodetic module 3 enables to perform quick data acquisition such as a rough scanning of a room.

Data acquired in the stand-alone mode can be transferred wirelessly from targeting part 4 to the base 1 for further processing there, particularly on-the-fly or already during measuring. In such embodiments with wireless data transmitters, the data storage of the mobile part 4 may be only a non-permanent storage and a permanent storage may be dispensable or optional, e.g. in form of an exchangeable storage card inserted in a card reader of targeting part 4.

For referencing of free-hand measurements with dismounted module 3 to the same reference or coordinate system of stationary measurements (or in other words for referencing measurements made from different stations), the module 3 or targeting part 4 comprises for instance positional sensors such as an inertial measurement unit (IMU), gyroscope and/or inclinometer or GNSS-receivers in case of outdoor activities (not shown). Additionally or alternatively, a referencing such as registration of 3D point clouds can be effected by measuring a number of reference points from both the stationary position as well as from the free-hand position and/or by 2D- or 3D-image based path derivation using image processing techniques such as feature matching with SIFT-, SURF- ORB- or FAST-algorithms.

A skilled person is aware of the fact that details, which are here shown and explained with respect to different embodiments, can also be combined in other permutations in the sense of the invention if not indicated otherwise.

## Claims

1. Geodetic instrument, in particular a total station, laser scanner, laser tracker or laser level, comprising
• a base part and
• a targeting part,
wherein
• the base part at least comprises a power unit for powering the geodetic instrument,
• the targeting part comprises a surveying and/or projection module for geodetic surveying and/or projection in a changeable target direction and
• any change of the target direction is effected with the base part remaining static wherefore
o the targeting part is rotatable relative to the base part about at least a first, in particular vertical, axis and
o the base part's inertia is equal to or greater than the target part's inertia.

2. Geodetic instrument according to claim 1,
**characterized in that**
the surveying and/or projection module is rotatable about a second, in particular horizontal, axis.

3. Geodetic instrument according to any of the preceding claims,
**characterized by**
one human-machine interface situated in the base part.

4. Geodetic instrument according to any of the preceding claims,
**characterized by**
a wireless transmitter situated in the base part.

5. Geodetic instrument according to any of the preceding claims,
**characterized by**
at least one drive, powered by the power unit, adapted for automated change of the target direction and at least one angle encoder for measuring the targeting direction of the geodetic instrument, wherein the at least one drive and the at least one angle encoder are situated in the base part.

6. Geodetic instrument according to any of the preceding claims,
**characterized in that**
• all units of the geodetic instrument which have not to be moved for said change of targeting direction and/or
• units with a high inertia compared to the inertia of other units of the geodetic instrument
are situated in the base part.

7. Geodetic instrument according to any of the preceding claims,
**characterized in that**
at least the base part is balancing mass free.

8. Geodetic instrument according to any of the preceding claims,
**characterized in that**
the mass of the base part is chosen such, in particular by an according distribution of instruments units among targeting part and base part and/or chose of power unit size, that the resonant frequency of the geodetic instrument is optimized with respect to a non-interference with geodetic measurements by the geodetic instrument.

9. Geodetic instrument according to any of the preceding claims,
**characterized by**
the targeting part is mountable to the base part and dismountable from the base part tool-free.

10. Geodetic instrument according to claim 9,
**characterized in that**
the geodetic instrument is designed for mounting of
• various targeting parts and/or surveying and/or projection modules of different geodetic type and execution of accordingly different geodetic surveying and/or projection functions, and/or
• various base parts, in particular with different inertia, power units and/or processors.

11. Geodetic instrument according to claim 9 or 10,
**characterized in that**
the base part is fixedly mounted to a support structure, in particular a tripod or an autonomous/robotic vehicle support structure.

12. Geodetic instrument according to claim 11,
**characterized in that**
the power unit is embodied as an electrical power supply.

13. Geodetic instrument according to any of claims 9 to 12,
**characterized in that**
the targeting part and/or the geodetic surveying and/or projection module is designed as a portable stand-alone geodetic surveying and/or projection device with a battery, a data storage and a processor in such a way that temporarily geodetic surveying and/or projection with the geodetic surveying and/or projection device dismounted from the base part and/or targeting part is enabled.

14. Geodetic instrument according to any of the preceding claims,
**characterized by**
a mechanical and electrical interface connecting the targeting part to the base part, in particular wherein the interface comprises an optical interface.

15. Geodetic instrument according to claim 14,
**characterized in that**
the interface comprises at least three guidance elements (50) with equal angular spacing to each other whereby each guidance element comprises a ball (27) or spherical calotte (27a) and a two-point support (26, 26a) as a receiving counterpart.
